# EUROPEAN PATENT APPLICATION

(11) **EP 2 339 523 A1**
(43) Date of publication of application: **29.06.2011**
(21) Application number: 09178796.0
(22) Date of filing: 11.12.2009
(51) Int. Cl.: G06Q 30/00

(54) **Targeted consumer advertising**

(71) Applicant: Cascard Oy, 90100 Oulu (FI)
(72) Inventor: Korhonen, Jani, 90840, Kuopio (FI); Tauriainen, Erno, 90560, Oulu (FI)
(74) Representative: Pykälä, Timo Tapani

(57) **Abstract**

Targeted consumer advertising is disclosed. A method comprises registering (302) electronically, by an electronic apparatus, both personal identification and contact information of a consumer; authenticating (304) electronically by an electronic apparatus the consumer both by communicating electronically with the consumer utilizing the registered contact information and by authenticating electronically the identity of the consumer with an external authentication service; and providing (306) electronically, by an electronic apparatus, targeted consumer advertising to the authenticated consumer utilizing the registered contact information.

## Description

### Field

The invention relates generally to targeted consumer advertising, and specifically to an apparatus, a method, and a computer-readable storage medium used in targeted consumer advertising.

### Background

Targeted consumer advertising aims at improving the efficiency of the advertising, i.e. an advertisement is ideally delivered only to a consumer interested in the marketed service or product. The motivation to the consumer to receive the targeted advertisement may be increased by paying for the consumer a fee for each received advertisement. As such a concept is relatively recent, further sophistication is desirable.

### Brief description

The present invention seeks to provide an improved apparatus, an improved method, and an improved computer-readable storage medium.

According to an aspect of the present invention, there is provided an apparatus as specified in claim 1.

According to another aspect of the present invention, there is provided a method as specified in claim 5.

According to another aspect of the present invention, there is provided a computer-readable storage medium as specified in claim 9.

### List of drawings

Embodiments of the present invention are described below, by way of example only, with reference to the accompanying drawings, in which
Figures 1A and 1 B illustrate an example configuration of a targeted advertising system;
Figure 2 illustrates an example structure of an apparatus; and
Figure 3 illustrates embodiments of a method.

### Description of embodiments

The following embodiments are exemplary. Although the specification may refer to "an" embodiment in several locations, this does not necessarily mean that each such reference is to the same embodiment(s), or that the feature only applies to a single embodiment. Single features of different embodiments may also be combined to provide other embodiments.

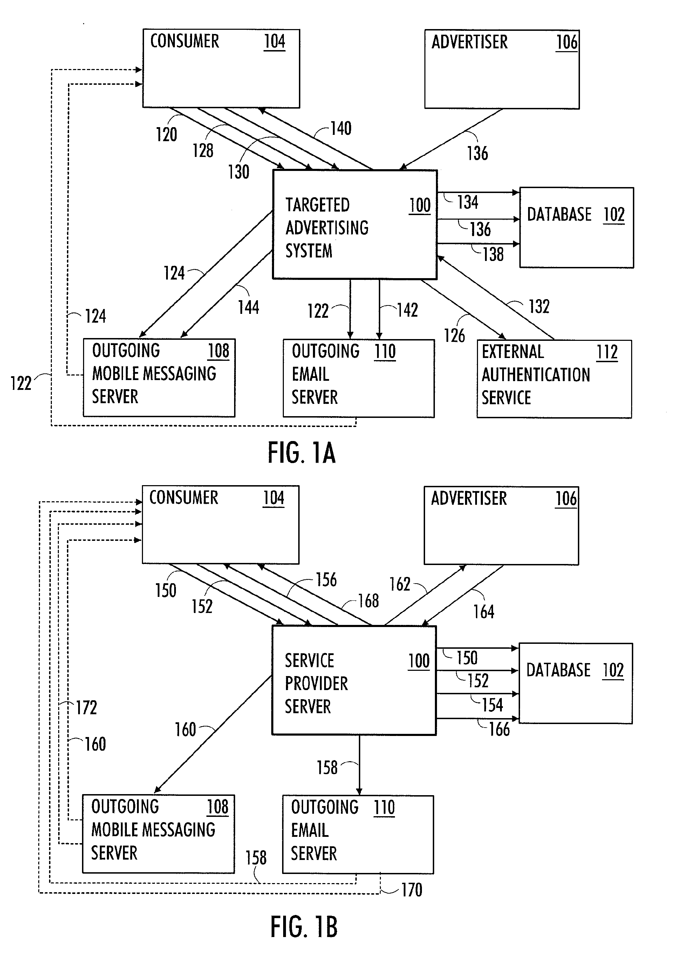

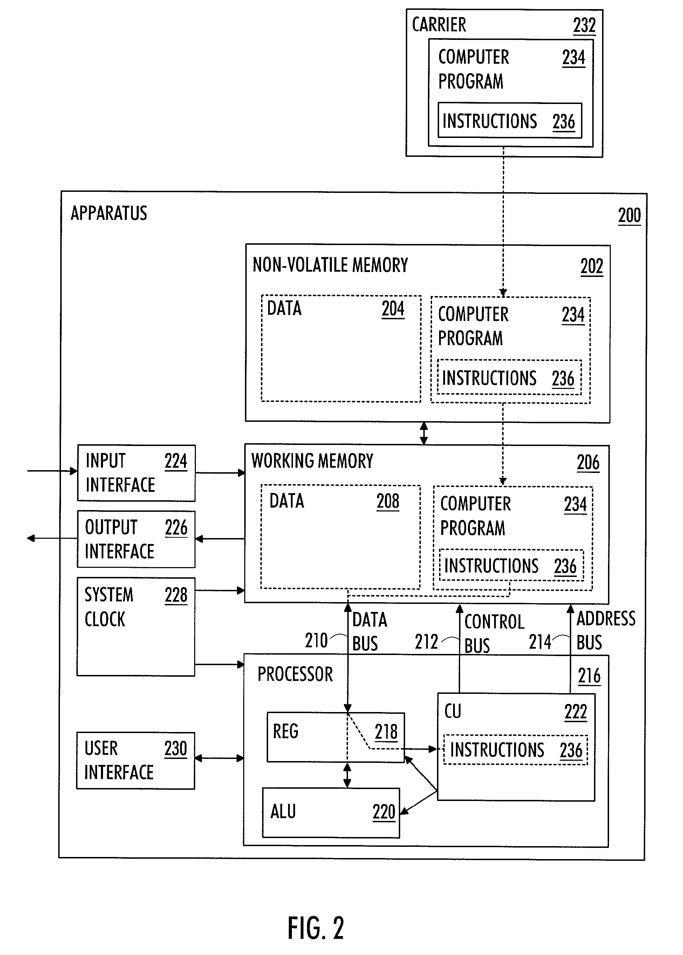

Figures 1A, 1B, and 2 illustrate embodiments of various apparatuses. Figures 1A, 1 B, and 2 only show some elements and their implementation may differ from what is shown. The connections shown in Figures 1A, 1 B, and 2 are logical connections; the actual physical connections may be different. Interfaces between the various elements may be implemented with suitable interface technologies, such as a message interface, a method interface, a sub-routine call interface, a block interface, or any means enabling communication between functional sub-units. It should be appreciated that the apparatuses may comprise other parts. However, such other parts are irrelevant to the actual invention and, therefore, they need not be discussed in more detail here. It is also to be noted that although some elements are depicted as separate ones, some of them may be integrated into a single physical element. The specifications of the apparatuses may develop rapidly. Such development may require extra changes to an embodiment. Therefore, all words and expressions should be interpreted broadly, and they are intended to illustrate, not to restrict, the embodiments.

With reference to Figure 1A, an example configuration of a targeted advertising system 100 is described. The targeted advertising system 100 comprises a database 102 and it interacts with consumers 104, advertisers 106, an outgoing mobile messaging server 108, an outgoing email server 110, and an external authentication service 112.

The advertiser 106, i.e. the advertisement provider, may use a web browser over TCP/IP (Transmission Control Protocol / Internet Protocol) to access the targeted advertising system 100.

The consumer 104, i.e. the receiver of the advertisement, may use an email client over TCP/IP, mobile phone with SMS and/or MMS capabilities and/or other instant messaging features, and/or a web browser over TCP/IP to access the targeted advertising system 100.

The targeted advertising system 100 is configured to implement a suitable targeted advertising scheme. Consumers 104 and advertisers 106 are registered in the targeted advertising system 100, whereby information of each consumer 104, each advertiser 106, and each advertisement campaign is stored in a database 102.

The targeted advertising system 100 may be configured to provide various user interfaces. An advertiser user interface is configured to interact with each advertiser 106 in order to produce a suitable targeted advertising campaign by collecting basic information from the advertiser, planning the advertising campaign etc. A consumer user interface is configured to recruit consumers 104 to the system by collecting basic information from the consumer, such as age, sex, place of residence, nationality, language(s), hobbies, interests, consumer habits, etc. An administrator user interface is configured to manage the targeted advertising system 100, i.e. to interact with the advertisers and the customers, plan the campaign in co-operation with the advertiser, implement the pricing and reward schemes etc.

The external authentication service 112 is configured to authenticate the consumer 104, because if each consumer 104 is authenticated, the reliability of the system is improved, i.e. the advertiser 106 is assured that the advertisement is really targeted at true individuals interested in their services or products. Authentication is the act of confirming someone as authentic, i.e. that the claims made by or about the subject are true. The authentication involves confirming the identity of the person. The external authentication service 112 may be a registry maintained by a government authority, population register centre, and/or a service maintained by a bank, or any other authentication service capable of reliably checking the identity of the consumer 104.

In Finland, the consumer 104 may be verified in web-based systems by using commonly used person identification services offered by banks (TUPAS), for example. The downside of that is that not all consumers have access to the TUPAS. Also, the TUPAS only verifies the user and does not create a similar update service as offered by Itella (= national mail enterprise owned by the Finnish state) that provides access to the population register centre.

The outgoing mobile messaging server 108 and/or the outgoing email server 110 are configured to deliver information received from the targeted advertising system 100 to each consumer 104 through a communication system. The communication system may communicate in a wired or a wireless fashion. Such communication techniques utilize electric and/or magnetic radiation. GSM (Global System for Mobile Communications), WCDMA (Wideband Code Division Multiple Access), WLAN (Wireless Local Area Network) or Bluetooth® are examples of wireless communication standards, but also other standard communication techniques and even non-standard and/or proprietary wireless communication techniques may be used. Naturally, all standard/non-standard wired communication techniques may be used, such as Ethernet, TCP/IP, etc. The communication network may be the Internet, or a part of the Internet, or it may be coupled to the Internet. The protocols used and the specifications of the communication techniques, especially in wireless communication, develop rapidly. Such development may require extra changes to an embodiment. Therefore, all words and expressions should be interpreted broadly and they are intended to illustrate, not to restrict, the embodiment.

The consumer 104 may use a user terminal configured to receive the targeted advertisement from the targeted advertising system 100 through the communication system. The targeted advertisement may be received as an SMS (Short Message Service) message, an MMS (Multimedia Message Service), an electronic mail message, a Twitter tweet, or on a personal page in the web, or in some social media, etc. In all cases, the user terminal may be used to view the targeted advertisement. The user terminal may be a mobile device, which refers to a portable computing device or a computer, such as a desktop computer, a laptop computer, a palmtop computer, a terminal of a computer system, or any other suitable electronic user terminal capable of presenting the targeted advertisement. The mobile device may be a wireless mobile communication device operating with or without a subscriber identification module (SIM), including, but not limited to, the following types of devices: mobile phone, smartphone, personal digital assistant (PDA), handset.

In summary, the consumer 104 indicates her interest areas, whereupon the advertiser 106 may provide targeted advertisement to the consumer 104. In an embodiment, the memory 202/206 and the computer program 234 instructions 236 are further configured to, with the processor 216, cause the apparatus 200 to perform: provide a fee for the authenticated consumer 104 for receiving the targeted consumer advertising utilizing the registered contact information. This may be implemented such that the advertiser 106 may credit the consumer 104 with a small sum of money for receiving the advertisement, i.e. the advertiser 106 makes a micropayment to the consumer 104. A 'micropayment' refers to a means for transferring very small amounts of money in situations where collecting such small amounts of money with the usual payment systems is impractical or very expensive in terms of the amount of money being collected. The money sum may be a few Eurocents or even less. The micropayment may be credited to a consumer 104 account such as a personal prepaid card, a personal debit card, a personal credit card, and/or a bank account of the consumer 104. Banque Invik S.A. based in Luxembourg offers a prepaid card, EveryWhereMoney™ account, which may be used in the described targeted advertising system 100. With EveryWhereMoney™ the consumer 104 receives a prepaid account in a currency of her choice with a payment card attached. The payment card is worldwide accepted and may be used to withdraw money and to purchase with merchants or securely in the Internet. As the advertiser 106 pays the consumer-specific micropayment invoice by bank transfer, the sum fixed in the micropayment invoice is transferred to the EveryWhereMoney™ account of the consumer 104.

The targeted advertising system 100 described in Figure 1A may be implemented by one or more apparatuses. With reference to Figure 2, an example structure of an apparatus 200 is described.

The apparatus 200 comprises a processor 216 and a memory 202/206 including computer program 234 instructions 236. The memory 202/206 and the computer program 234 instructions 236 are configured to, with the processor 216, cause the apparatus 200 to perform: register electronically both personal identification and contact information of the consumer 104; authenticate the consumer 104 both by communicating electronically with the consumer 104 utilizing the registered contact information and by authenticating electronically identity of the consumer with the external authentication service 112; and provide electronically targeted consumer advertising to the authenticated consumer 104 utilizing the registered contact information.

In an embodiment, the memory 202/206 and the computer program 234 instructions 236 are further configured to, with the processor 216, cause the apparatus 200 to perform: register electronically time criteria for the targeted consumer advertising of the authenticated consumer 104; and target the targeted consumer advertising on the authenticated consumer 104 utilizing the registered time criteria.

Dynamic time criteria may be a part of the consumer profile. As an example, let us suppose that consumer A sets timed profile settings concerning the following week informing that she will spend the next weekend in city X. The advertiser creates an advertisement based on the consumer location determining that the advertisement is targeted on consumers in city X (among the other targeting criteria). The advertiser sees the amount of potential customers, consumer A being included as one of them, because the advertisement is set to be active during the next weekend and the consumer location criteria matches the location of consumer A during the weekend. Consequently, customer A receives the advertisement during the weekend. The advertisement may advertise a lunch menu of a local restaurant in city X, for example.

Dynamic time criteria may be a part of the consumer profile and also a part of advertisement settings. Again, consumer A sets timed profile settings concerning the following week informing that she will spend the next weekend in city X. The advertiser creates an advertisement based on the consumer location determining that the advertisement is targeted on consumers in city X (among the other targeting criteria), but now the advertiser also sets the time criteria: the advertising starts immediately and the consumer must be in city X during a predetermined time interval. Customer A receives the advertisement as soon as the system has processed it, as her location is city X, and the predetermined time interval includes the next weekend. The advertisement may advertise a local theater show to which tickets need to be booked in advance, for example.

In general, the apparatus 200 may be an electronic digital computer which may comprise, besides the processor 216 and the working memory 206, a system clock 228. Furthermore, the computer 200 may comprise a number of peripheral devices. In Figure 2, some peripheral devices are illustrated: the non-volatile memory 202, the input interface 224, the output interface 226, and a user interface 230 (such as a pointing device, a keyboard, a display, etc.). The user interface 230 may be used for user interaction, i.e. to implement the user interfaces mentioned in connection with Figure 1A, for example. Naturally, the computer 200 may comprise a number of other peripheral devices not illustrated here for the sake of clarity.

The system clock 228 constantly generates a stream of electrical pulses, which cause the various transferring operations within the computer 200 to take place in an orderly manner and with specific timing.

Depending on the processing power needed, the computer 200 may comprise several (parallel) processors 216, or the required processing may be distributed amongst a number of computers 200. The computer 200 may be a laptop computer, a personal computer, a server computer, a mainframe computer, or any other suitable computer. As the processing power of portable communications terminals, such as mobile phones, is constantly increasing, the apparatus 200 functionality may be implemented into them as well. Besides the contemporary computers utilizing binary digits, or bits, for presenting data 208 and instructions 236 by the use of the Binary number system's two-binary digits "0" and "1", the emerging quantum computers may also be used, such quantum computers utilizing quantum bits, or qubits, instead of bits.

The term 'processor' refers to a device that is capable of processing data. The processor 216 may comprise an electronic circuit or electronic circuits implementing the required functionality, and/or a microprocessor or microprocessors running computer program 234 instructions 236 implementing the required functionality. When designing the implementation, a person skilled in the art will consider the requirements set for the size and power consumption of the apparatus, the necessary processing capacity, production costs, and production volumes, for example. The electronic circuit may comprise logic components, standard integrated circuits, application-specific integrated circuits (ASIC), and/or other suitable electronic structures.

The microprocessor 216 implements functions of a central processing unit (CPU) on an integrated circuit. The CPU 216 is a logic machine executing computer program 234 instructions 236. The program instructions 236 may be coded as a computer program 234 using a programming language, which may be a high-level programming language, such as C, or Java, or a low-level programming language, such as a machine language, or an assembler. The CPU 216 may comprise a set of registers 218, an arithmetic logic unit (ALU) 220, and a control unit (CU) 222. The control unit 222 is controlled by a sequence of program instructions 236 transferred to the CPU 216 from the working memory 206. The control unit 222 may contain a number of microinstructions for basic operations. The implementation of the microinstructions may vary depending on the CPU 216 design. The microprocessor 216 may also have an operating system (a general purpose operating system, a dedicated operating system of an embedded system, or a real-time operating system, for example), which may provide the computer program 234 with system services.

There may be three different types of buses between the working memory 206 and the processor 216: a data bus 210, a control bus 212, and an address bus 214. The control unit 222 uses the control bus 212 to set the working memory 206 in two states, one for writing data into the working memory 206 and the other for reading data from the working memory 206. The control unit 222 uses the address bus 214 to send to the working memory 206 address signals for addressing specified portions of the memory in writing and reading states. The data bus 210 is used to transfer data 208 from the working memory 206 to the processor 216 and from the processor 216 to the working memory 206, and to transfer the instructions 236 from the working memory 206 to the processor 216.

The working memory 206 may be implemented as a random-access memory (RAM), where the information is lost after the power is switched off. The RAM is capable of returning any piece of data in a constant time, regardless of its physical location and whether or not it relates to a previous piece of data. The data may comprise data 208 relating to targeted advertising, personal identification and contact information of the consumer 104, any temporary data needed during the processing, and computer 234 program instructions 236 etc.

The non-volatile memory 202 retains the stored information even when not powered. Examples of non-volatile memory include read-only memory (ROM), flash memory, magnetic computer storage devices, such as hard disk drives, and optical discs. As is shown in Figure 1A, the non-volatile memory 110 may store both data 204 relating to targeted advertising, personal identification and contact information of the consumer 104, and computer program 234 instructions 236.

An embodiment provides a computer-readable storage medium comprising computer 234 program instructions 236 which, when loaded into the apparatus 200, cause the apparatus 200 to perform: register electronically both personal identification and contact information of the consumer 104; authenticate the consumer 104 both by communicating electronically with the consumer 104 utilizing the registered contact information, and by authenticating electronically identity of the consumer 104 with the external authentication service 112; and provide electronically targeted consumer advertising to the authenticated consumer 104 utilizing the registered contact information.

The computer program 234 may be in a source code form, object code form, or in some intermediate form. The computer program 234 may be stored in a carrier 232, which may be any entity or device capable of carrying the program to the apparatus 200. The carrier 232 may be implemented as follows, for example: the computer program 234 may be embodied, besides computer-readable storage medium, on a record medium, stored in a computer memory, embodied in a read-only memory, carried on an electrical carrier signal, carried on a telecommunications signal, and/or embodied on a software distribution medium. In some jurisdictions, depending on the legislation and the patent practice, the carrier 232 may not be a telecommunications signal.

Figure 2 illustrates that the carrier 232 may be coupled to the apparatus 200, whereupon the program 234 comprising the program instructions 236 is transferred into the non-volatile memory 202 of the apparatus 200. The program 234 with its program instructions 236 may be loaded from the non-volatile memory 202 into the working memory 206. During running of the program 234, the program instructions 236 are transferred via the data bus 210 from the working memory 206 into the control unit 222, wherein usually a portion of the instructions 236 resides and controls the operation of the apparatus 200.

There are many ways to structure the program 234. The operations of the program may be divided into functional modules, sub-routines, methods, classes, objects, applets, macros, etc., depending on the software design methodology and the programming language used. In modern programming environments, there are software libraries, i.e. compilations of ready made functions, which the program may utilize for performing a wide variety of standard operations.

Besides the basic entities described earlier, there may be a number of other, supplementary entities. Data 208, which comprises data relating to targeted advertising, personal identification and contact information of the consumer 104, may be brought into the working memory 206 via the non-volatile memory 202 or via the input interface 224. There may exist a further software entity for this operation. The data 204 may have been brought into the non-volatile memory 202 via a memory device (such as a memory card, an optical disk, or any other suitable non-volatile memory device) or via a telecommunications connection (via Internet, or another wired/wireless connection). The input interface 224 may be a suitable communication bus, such as USB (Universal Serial Bus) or some other serial/parallel bus, operating in a wireless/wired fashion. The input interface 224 may be directly coupled to an electronic system, or there may be a telecommunications connection between the input interface 224 and the electronic system.

In summary, the described targeted advertising system 100 provides an electrical channel (e.g. web-pages, email, instant messages, Internet-based unidirectional information feeds and messages to mobile devices) for advertisers 106 to target consumers 104 based on the pre-conditions set by the consumer 104. Specifically, the consumers 104 have registered into the system so that the following combined verifications may be used: their personal identification (name, birth date and address) have been automatically authenticated from the external authentication service 112; and their phone numbers and email addresses are verified by sending them a personal probe messages asking the consumers 104 to confirm that they received the information correctly.

The personal information authentication is performed when the consumer 104 for the first time signs in to the targeted advertising system 100. The external authentication service 112 may send address updates and the status of the person (e.g. deceased) to the targeted advertising system 100 automatically. The authentication happens automatically online. If the information on the consumer 104 does not pass the authentication, an administrative user of the targeted advertising system 100 may manually approve the registration by using authentication methods outside of the scope of this system. When the registration and authentication are completed, the consumer 104 has access to the targeted advertising system 100 and may control his/her personal account in the system. The account may then be used to access the targeted advertisements and to set the pre-conditions under which the consumer is prepared to receive advertisements. Especially, the created account has now been securely authenticated against the external authentication service 112 and, consequently, the targeted advertising system 100 is only accessible by authenticated consumers 104.

The targeted advertising system 100 enables the consumer 104 to enter criteria for receiving electrical advertisements. As a user of the system, the consumer 104 may set into the targeted advertising system 100 various profile based information which may be used by the targeted advertising system 100 to limit the advertising to only those consumers 104 who have a fully or partly matching profile. Specifically, the targeted advertising system 100 enables the consumer 104 to adjust the criteria according to time. This means that the consumer 104 may change anytime the criteria which controls in real-time which advertisements are being delivered to the consumer 104. The consumer 104 may also set specific future time periods, which will be activated in due time. Such future criteria may be used in two ways: to trigger the sending of the electrical advertisement in a time moment in the future or to send the advertisement before the criteria time period, so that the advertisement content is tailored to meet the future criteria.

The targeted advertising system 100 offers higher advertisement value to the service provider by offering channels to the authenticated consumers 104. This value is further enhanced by allowing the consumer 104 to set criteria for receiving the advertisements. By allowing the consumer 104 to change the criteria in real-time and to set future time periods, the targeted advertising system 100 actually makes it possible for the consumers 104 to preprogram how they will receive electrical advertisements and with what content.

If the time-based criteria and the possibility to alter the criteria were left out of the system, the consumers 104 would have a fixed set of criteria. This would work for some time, but as consumer's need for commercial information changes, the fixed criteria would match with advertisements the consumer 104 is no longer interested in. This would lead to a weakened advertisement value.

If the criteria settings were left out totally, the consumers 104 would receive non-targeted mass advertisement which has the highest weakening impact on the advertisement value.

In principle, it could also be possible for the consumers 104 to give their criteria directly to the advertisers 106 without the targeted advertising system 100 in between. However, consumers 104 in general are not willing to do that. Additionally, the consumers 104 would in that case give the information to multiple places, whereas with the targeted advertising system 100 they may update their information to one place and still maintain their anonymity towards the advertisers 106.

Next, with reference to Figure 1A, authentication of the consumer 104 is explained as a message flow between various actors.

The consumer 104 enters 120 the personal contact information into the targeted advertising system 100 (using IP/TCP/HTTP protocols, for example).

An email is sent out 122 from the targeted advertising system 100 through the outgoing email server 110 to be verified by the consumer 104.

A mobile message is sent out 124 from the targeted advertising system 100 through the outgoing mobile messaging server 108 to be verified by the consumer 104 (using GSM and IP/TCP protocols, for example).

Name, address and birth date of the consumer 104 are verified 126 against the external authentication service (using IP/TCP/HTTP protocols, for example).

The consumer 104 confirms 128 the email into the targeted advertising system 100 (using IP/TCP/HTTP protocols, for example).

The consumer 104 confirms 130 the mobile message into the targeted advertising system 100 (using IP/TCP/HTTP protocols, for example).

The external authentication service 112 confirms 132 the name, address and birth date of the consumer 104 into the targeted advertising system 100 (using IP/TCP/HTTP protocols, or IP/TCP/FTP protocols, for example).

A consumer account is created 134 into the database 102.

The advertiser 106 enters 136 an electrical advertisement into the targeted advertising system 100 (using IP/TCP/HTTP protocols, for example).

The targeted advertising system 100 matches 138 the existing advertisements against the verified consumer's account in the database 102.

The targeted advertising system 100 displays 140 the advertisement in the consumer's personal web user interface (using IP/TCP/HTTP protocols, for example).

The targeted advertising system 100 sends 142 out the advertisement content over email (using IP/TCP protocols, for example).

The targeted advertising system 100 sends out 144 the advertisement content over mobile messaging (using GSM and IP/TCP protocols, for example).

Next, with reference to Figure 1B, setting of the consumer 104 specific criteria is explained as a message flow between various actors.

The consumer 104 logs 150 in to the targeted advertising system 100 (using IP/TCP/HTTP protocols, for example).

The consumer 104 changes 152 the personal criteria for receiving the advertisements (using IP/TCP/HTTP protocols, for example).

The targeted advertising system 100 matches 154 the existing advertisements against the verified consumer's account (using a database connection over TCP, for example).

The targeted advertising system 100 displays 156 the advertisement in the consumer's personal web user interface (using IP/TCP/HTTP protocols, for example).

The targeted advertising system 100 sends 158 out the advertisement content over email (using IP/TCP protocol, for example).

The targeted advertising system 100 sends 160 out the advertisement content over mobile messaging (using GSM and IP/TCP protocols, for example).

The advertiser 106 sees 162 from the targeted advertising system 100 web user interface that there has been a change in the receiving criteria settings (using IP/TCP/HTTP protocols, for example).

The advertiser 106 adds 164 new advertisement content to the targeted advertising system 100, the new content matching the changed criteria settings (using IP/TCP/HTTP protocols, for example).

The targeted advertising system 100 matches 166 the new advertisement against the verified consumers' accounts (using a database connection over TCP, for example).

The targeted advertising system 100 displays 168 the advertisement in the consumers' personal web user interfaces (using a database connection over TCP, for example).

The targeted advertising system 100 sends 170 out the advertisement content over email (using IP/TCP protocols, for example).

The targeted advertising system 100 sends 172 out the advertisement content over mobile messaging (using GSM and IP/TCP protocols, for example).

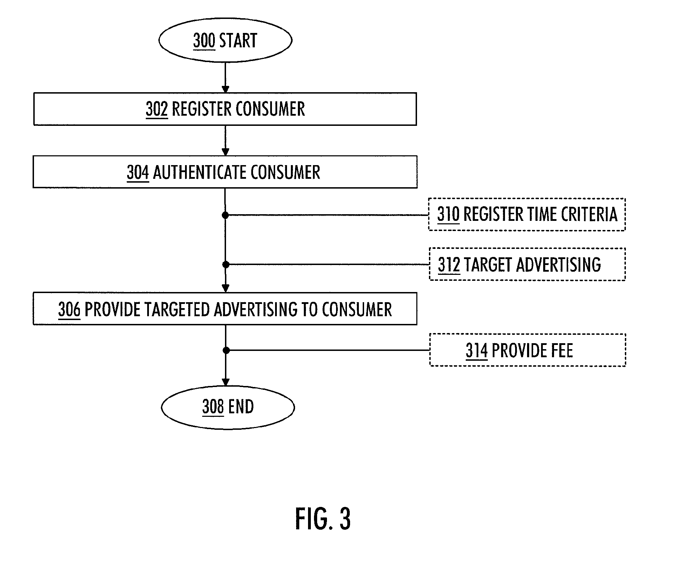

Next, a method will be described with reference to Figure 3. The operations are in no absolute chronological order, and some of the operations may be performed simultaneously or in an order differing from the given one. Other functions, not described in this application, may also be executed between the operations or within the operations. Some of the operations or parts of the operations may also be left out or replaced by a corresponding operation or part of the operation. The method starts in 300. In 302, an electronic apparatus registers electronically both personal identification and contact information of a consumer. In 304, an electronic apparatus authenticates electronically the consumer both by communicating electronically with the consumer utilizing the registered contact information and by authenticating electronically identity of the consumer with an external authentication service. In 306, an electronic apparatus provides electronically targeted consumer advertising to the authenticated consumer utilizing the registered contact information. The method ends in 308. The embodiments of earlier described apparatuses may also be used to enhance the method. In an embodiment, a computer-readable storage medium comprising program instructions which, when loaded into an apparatus, cause the apparatus to perform the described operations. 'An electronic apparatus' may be a single apparatus, or the processing may be distributed among a number of electronic apparatuses, depending on the implementation and the required processing capacity.

In an embodiment, the method further comprises: registering 310 electronically by an electronic apparatus time criteria for the targeted consumer advertising of the authenticated consumer; and targeting 312 by an electronic apparatus the targeted consumer advertising on the authenticated consumer utilizing the registered time criteria.

In another embodiment, the method further comprises: providing 314 by an electronic apparatus a fee for the authenticated consumer for receiving the targeted consumer advertising utilizing the registered contact information.

It will be obvious to a person skilled in the art that, as technology advances, the inventive concept can be implemented in various ways. The invention and its embodiments are not limited to the examples described above but may vary within the scope of the claims.

## Claims

1. An apparatus comprising
a processor,
a memory including computer program instructions,
the memory and the computer program instructions being configured to, with the processor, cause the apparatus to perform:
register electronically both personal identification and contact information of a consumer;
authenticate the consumer both by communicating electronically with the consumer utilizing the registered contact information and by authenticating electronically the identity of the consumer with an external authentication service; and
provide electronically targeted consumer advertising to the authenticated consumer utilizing the registered contact information.

2. The apparatus of claim 1, wherein the memory and the computer program instructions are further configured to, with the processor, cause the apparatus to perform:
register electronically time criteria for the targeted consumer advertising of the authenticated consumer; and
target the targeted consumer advertising for the authenticated consumer utilizing the registered time criteria.

3. The apparatus of claim 1 or 2, wherein the external authentication service is one of a registry maintained by a government authority, a population register centre, a service maintained by a bank.

4. The apparatus of any preceding claim, wherein the memory and the computer program instructions are further configured to, with the processor, cause the apparatus to perform:
provide a fee for the authenticated consumer for receiving the targeted consumer advertising utilizing the registered contact information.

5. A method comprising:
registering electronically by an electronic apparatus both personal identification and contact information of a consumer;
authenticating electronically by an electronic apparatus the consumer both by communicating electronically with the consumer utilizing the registered contact information and by authenticating electronically the identity of the consumer with an external authentication service; and
providing electronically by an electronic apparatus targeted consumer advertising to the authenticated consumer utilizing the registered contact information.

6. The method of claim 5, further comprising:
registering electronically by an electronic apparatus time criteria for the targeted consumer advertising of the authenticated consumer; and
targeting by an electronic apparatus the targeted consumer advertising for the authenticated consumer utilizing the registered time criteria.

7. The method of claim 5 or 6, wherein the external authentication service is one of a registry maintained by a government authority, a population register centre, a service maintained by a bank.

8. The method of any preceding claim 5 to 7, further comprising:
providing by an electronic apparatus a fee for the authenticated consumer for receiving the targeted consumer advertising utilizing the registered contact information.

9. A computer-readable storage medium comprising computer program instructions which, when loaded into an apparatus, cause the apparatus to perform:
register electronically both personal identification and contact information of a consumer;
authenticate the consumer both by communicating electronically with the consumer utilizing the registered contact information and by authenticating electronically the identity of the consumer with an external authentication service; and
provide electronically targeted consumer advertising to the authenticated consumer utilizing the registered contact information.
